# EUROPEAN PATENT APPLICATION

(11) **EP 4 195 461 A1**
(43) Date of publication of application: **14.06.2023**
(21) Application number: 21000350.5
(22) Date of filing: 10.12.2021
(51) Int. Cl.: H02K 1/32, H02K 5/20, H02K 9/06, H02K 9/18

(54) **ELECTRIC MACHINE**

(71) Applicant: MAHLE International GmbH, 70376 Stuttgart (DE)
(72) Inventor: Krascek, Martin, SI - 5210 Deskle (SI); Gasparin, Lovrenc, SI - 5000 Nova Gorica (SI); Licen, Andrej, SI - 5295 Branik (SI)

(57) **Abstract**

An electric machine (1) comprises a rotor (2) arranged to rotate about an axis (3), and a stator (4) surrounding the rotor (2) in the radial direction, and a housing (5) accommodating the rotor (2) and the stator (4), whereby the rotor (2) comprises a rotor core (6) for magnetic interaction with the stator (4), and the rotor core (6) and the stator (4) extend axially between a first chamber (7) and a second chamber (8) arranged at a first axial end (9) and second axial end (10) respectively of the electric machine, at least one cooling path (11) extending in the axial direction between the second chamber (8) and the first chamber (7) is arranged in the rotor (2) or in a radial gap (12) between the rotor (2) and the stator (4). The rotor (2) further comprises an axial fan (13) for generating a flow of cooling fluid from the second chamber (8) to the first chamber (7) along the at least one cooling path (11), the housing (5) providing a return path (14) for cooling fluid from the first chamber (7) to the second chamber (8), whereby the housing (5) comprises a generally radially extending first end wall (15) and a generally cylindrical wall (16) extending between the first and second axial ends (9, 10) of the electric machine (1) and the accommodating the stator (4), whereby the axial fan (13) projects radially into the first chamber (7) and is arranged to direct flow of cooling fluid towards the generally radially extending first end wall (15), whereby the generally radially extending first end wall (15) comprises a deflection surface (17) for deflecting an axial flow of the cooling fluid into a radial flow.

## Description

### TECHNICAL FIELD

The invention relates to an electric machine, in particular a motor or generator, according to the preamble of independent claim 1.

### BACKGROUND ART

A known prior art electric machine is disclosed in DE102010063973A1. This describes an electric machine with a closed air cooling cooling circuit, whereby a cooling flow passes axially through the rotor in one direction and returns through a housing of the stator in the other axial direction. A radial fan can be provided on the rotor shaft to generate the air flow.

### SUMMARY

The electric machine according to the invention as defined in claim 1 has the advantage that a cooling flow from the rotor area is efficiently guided towards the return flow path in the stator housing.

This is achieved according to a first aspect of the invention with an electric machine comprising a rotor arranged to rotate about an axis, and a stator surrounding the rotor in the radial direction, and a housing accommodating the rotor and the stator, whereby the rotor comprises a rotor core for magnetic interaction with the stator, and
- the rotor core and the stator extend axially between a first chamber and a second chamber arranged at a first and second axial end respectively of the electric machine,
- at least one cooling path extending in the axial direction between the second chamber and the first chamber is arranged in the rotor or in a radial gap between the rotor and the stator,
- the rotor further comprises an axial fan for generating a flow of cooling fluid from the second chamber to the first chamber along the at least one cooling path,
- the housing providing a return path for cooling fluid from the first chamber to the second chamber,
- whereby the housing comprises a generally radially extending first end wall and a generally cylindrical wall extending between first and second axial end of the electric machine and the accommodating the stator,
- whereby the axial fan projects radially into the first chamber and is arranged to direct flow of cooling fluid towards the generally radially extending first end wall,
- whereby the generally radially extending first end wall comprises a deflection surface for deflecting an axial flow of the cooling fluid into a radial flow.

By providing the electric machine with an axial fan, whereby the outflow of the fan is in the generally axial direction a high volume cooling air flow can be achieved, and by providing the deflection surface on the end wall, this axial flow is converted into a radial flow so that the cooling fluid can be efficiently guided towards the return flow path in the housing. The axial direction is parallel with the rotation axis of the rotor, and the radial direction is relative to the rotation axis of the rotor.

The deflection surface comprises advantageously a radially inner section which extends at least partly in the axial direction and transitions via a curved section into a radially outer section which extends substantially in the radial direction, thus providing a smooth transition of the cooling flow from the axial to radial direction.

The stator can comprise a plurality of windings extending axially through the stator and having winding heads which project axially into the first and second chamber respectively, whereby the axial fan is arranged at an axial position on the rotor in the region of the winding heads and radially inwards of the winding heads. In this way the axial fan does not extend beyond the winding heads, thus providing an axially compact electric machine as the axial length of the machine is determined by the axial length of the stator with winding heads and not need to accommodate the extra axial length of a fan.

The cylindrical wall of the housing can comprise a radially inner cylindrical wall part and a radially outer cylindrical wall part, whereby the radially inner cylindrical wall part comprises a first channel for liquid cooling of the stator. Advantageously the first channel can be closed on the radially outer side by the radially outer cylindrical wall part.

The first channel is preferably in the form a helical cooling path. Other configurations are however possible.

The radially outer cylindrical wall part can advantageously comprise the return path for cooling fluid from the first chamber to the second chamber, whereby the return path is in the form of at least one second channel which is fluidly separated from the first channel. When assembled on the radially inner cylindrical wall part, the radially outer cylindrical wall part can therefore perform the function of closing the first channel and comprising the at least one second channel in a single part.

In a preferred embodiment, a plurality of second channels in the form of holes extending axially through the radially outer cylindrical wall part between first and second axial end of the electric machine are provided. The second channels are therefore arranged for transferring heat from the second channels to first liquid cooling channels.

The cooling path, the return cooling path and the first and second chambers form part of a closed air cooling circuit.

In a further embodiment, the radially outer cylindrical wall part can also comprise an inlet and an outlet opening fluidly communicating with the first channel. By having the inlet and outlet, and the at least one first channel in the radially outer cylindrical wall part, the electric machine has a radially compact design.

At least one seal is preferably provided between the radially outer cylindrical wall part and the radially inner cylindrical wall part.

The inner cylindrical wall can comprise a recess for receiving a stack of stator laminations, the recess having an axial abutment surface defining the axial position of the stack of stator laminations.

In order to connect the first chamber with the return path, at least one radially extending third channel is preferably arranged adjacent to the generally radially extending first end wall, the at least one radially extending third channel extending through the radially inner cylindrical wall part of the housing and communicating fluidly with the return path. The arrangement of the third channel adjacent the first end wall enables the cooling flow from the fan which is diverted into the radial direction along the first end wall to flow directly into the second channel of the return path. The axial position of the at least one third channel is preferably such that the winding head of the stator does not axially extend over the at least one third channel, the cooling flow can therefore be guided unimpeded towards the return flow path.

In a preferred embodiment the radially inner cylindrical wall part is integrally formed out of one piece with the generally radially extending first end wall. This facilitates the assembly of the electric machine, as this integral part can be pre-assembled with the rotor and the radially outer cylindrical wall part can subsequently be slid axially over the radially inner cylindrical wall part to close the first cooling channel and to connect the first chamber to the return flow path.

The electric machine can further comprise a generally radially extending second end wall which delimits a portion of the second chamber, and is attached to the radially inner cylindrical wall part, such that the radially outer cylindrical wall part of the housing is fixed between axial facing surfaces of the first and second end walls respectively, fixing the radially outer cylindrical wall part with respect to the inner cylindrical wall part. The radially outer cylindrical wall part of the housing can thus be fixed in position with respect to the radially inner cylindrical wall part. If the second channels are in the form of holes extending axially through the entire length of the radially outer cylindrical wall part, then the first and second end walls can close off the end of the second channels.

The first and or the second generally radially extending second end wall can advantageously also support a bearing for a shaft of the rotor.

The generally radially extending first end wall can furthermore comprise attachment means for attaching the electric machine to an external part, whereby the attachment means are arranged in an area of the end wall which extends radially beyond the cylindrical wall of the housing.

### BRIEF DESCRIPTION OF THE DRAWINGS

Embodiments will now be described by way of example only with reference to the accompanying drawings, in which:
Figure 1 is a sectional side view of an electric machine according to one embodiment of the invention.
Figure 2 is a sectional side view of the electric machine of figure 1 in along the plane B-B of figure 3.
Figure 3 is a sectional view of the electric machine of figure 1 in along the plane C-C.

### DETAILED DESCRIPTION

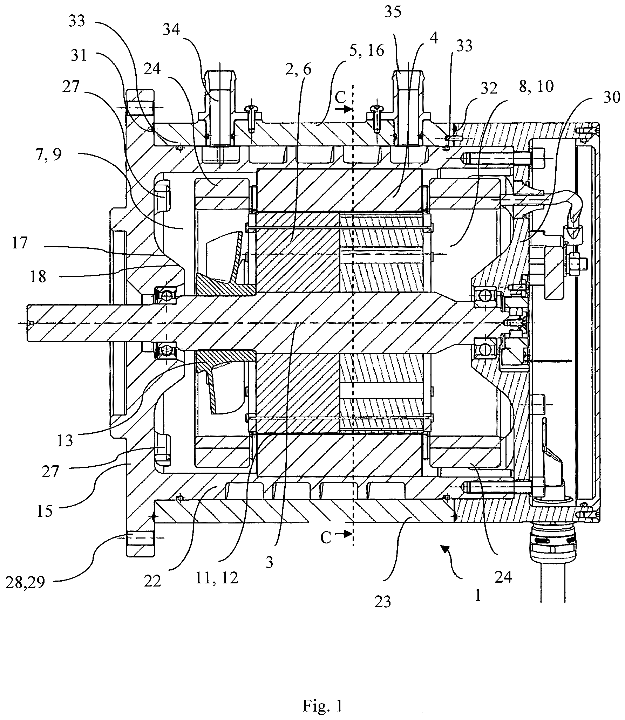

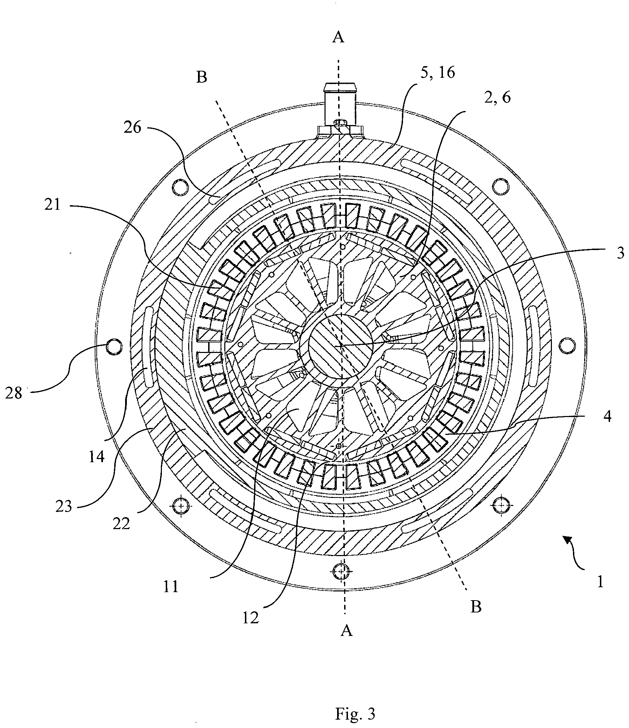

The figures 1-3 show cross section views of electric machine 1 according to one embodiment the invention. The electric machine 1 can be e.g. a generator or a motor. The electric machine 1 comprises a rotor 2 arranged to rotate about an axis 3, and a stator 4 surrounding the rotor 2 in the radial direction. A housing 5 accommodates the rotor 2 and the stator 4, whereby the rotor 2 comprises a rotor core 6 for magnetic interaction with the stator 4. The rotor core 6 can comprise rotor windings and/or permanent magnets or even be of squirrel cage design for generating a magnetic field in the rotor.

The rotor core 6 and the stator 4 extend axially between a first chamber 7 and a second chamber 8, which are arranged at a first axial end 9 and second axial end 10 respectively of the electric machine 1.

A cooling path 11 extends in the axial direction between the second chamber 8 and the first chamber 7. The cooling path 11 is formed by a plurality of openings extending axially through the rotor core 6, as can be seen in figure. Additionally or alternatively the cooling path 11 can be formed by a radial gap 12 between the rotor 2 and the stator 4.

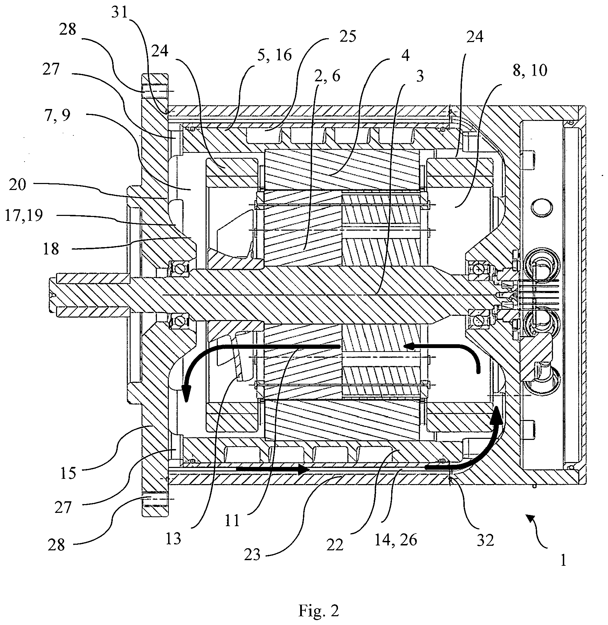

The rotor 2 further comprises an axial fan 13 for generating a flow of cooling fluid from the second chamber 8 to the first chamber 7 along the at least one cooling path 11. The axial fan comprises a hub portion and blades extending radially therefrom. The axial fan is fixed to the shaft of the rotor 2. The axial fan could also be formed integrally with the shaft. The stator 4 comprises a plurality of windings 21 extending axially through the stator 4 and having winding heads 2 which project axially into the first and second chamber 7, 8 respectively. The axial fan 13 projects radially into the first chamber 7 and is arranged to direct flow of cooling fluid axially towards the generally radially extending first end wall 15. As can be seen in figures 1 and 2, the axial fan 13 is arranged at an axial position on the rotor in the region of the winding heads 24 and radially inwards of the winding heads 24.

The generally radially extending first end wall 15 comprises a deflection surface 17 for deflecting an axial flow of the cooling fluid into a radial flow. The deflection surface 17 comprises a radially inner section 18 which extends at least partly in the axial direction and transitions via a curved section 19 into a radially outer section 20 which extends substantially in the radial direction. The cooling flow from the axial fan 13 is therefore deflected by the deflection surface 17 radially outwards in the chamber 7 towards the housing 5. The generally radially extending first end wall 15 comprises attachment means 28 for attaching the electric machine to an external part, whereby the attachment means 28 are arranged in an area 29 of the end wall 15 which extends radially beyond the cylindrical wall 16 of the housing 5. The attachment means 28 can be in the form of openings for receiving a screw or bolt.

The housing 5 provides a return path 14 for cooling fluid from the first chamber 7 to the second chamber 8. The cooling path 11, the return cooling path 14 and the first and second chambers 7, 8 therefore form part of a closed air cooling circuit of the electric machine 1.

The housing 5 comprises a generally radially extending first end wall 15 and a generally cylindrical wall 16 extending between the first and second axial ends 9, 10 of the electric machine 1 and the accommodating the stator 4. The stator 4, which is formed by a stack of laminations, can be inserted axially into the space bounded by the cylindrical wall 16, such that the stator 4 is in thermal contact with the cylindrical wall 16.

The cooling flow generated by the axial fan 13 is guided by the deflection surface 17 towards the cylindrical wall 16, and more particularly towards openings in the cylindrical wall 16 arranged adjacent to the first end wall 15. The openings form third channels 27 which connect the chamber 7 to the return cooling path 14.

In the embodiment shown, the cylindrical wall 16 of the housing comprises a radially inner cylindrical wall part 22 and a radially outer cylindrical wall part 23, whereby the radially inner cylindrical wall part 22 comprises at least one first channel 25 for liquid cooling of the stator 4. The first channel 25 can be in the form of a helical cooling path surrounding the stator circumferentially. Alternatively, a plurality of first channels 25 may be provided in parallel. As can be seen in figures 1 and 2, the first channel 25 is closed on the radially outer side by the radially outer cylindrical wall part 23. A seal 33 is provided between the radially inner cylindrical wall part 22 and a radially outer cylindrical wall part 23 to prevent leakage of the cooling liquid flowing through the first channel 25. Inlet and outlet openings are provided in the radially outer cylindrical wall part 23 and are fluidly connected with the first channel 25 or channels 25 for supplying a liquid coolant through the channel 25. The openings may be provided with connectors 34, 35.

The radially outer cylindrical wall part 23 comprises the return path 14 for cooling fluid from the first chamber 7 to the second chamber 8, whereby the return path 14 is in the form of at least one axially extending second channel 26 which is fluidly separated from the first channel 25.

The radially extending third channel 27 extends through the radially inner cylindrical wall part 22 of the housing 5 and communicates fluidly with the return path 14, as can be seen in figure 2. A plurality of third channels 27 corresponding to the number of second channels 26 may be provided circumferentially spaced in the inner cylindrical wall part 22. One side of each of the third channels 27 is bounded by the first end wall 15, so that the cooling flow deflected by the deflection surface 17 is guided along the first end wall 15 through the third channels 27 into the second channels 26 in the outer cylindrical wall part 23. In the embodiment shown, the radially inner cylindrical wall part 22 is integrally formed out of one piece with the generally radially extending first end wall 15.

The second end 10 of the electric machine 1 comprises a generally radially extending second end wall 30 which delimits a portion of the second chamber 8 and is attached to the radially inner cylindrical wall part 22, e.g. with screws, such that the radially outer cylindrical wall part 23 of the housing 5 is fixed between axial facing surfaces 31, 32 of the first and second end walls 15, 30 respectively, fixing the radially outer cylindrical wall part 23 with respect to the inner cylindrical wall part 22.

### LIST OF REFERENCE NUMERALS

- 1.: electric machine
- 2.: rotor
- 3.: rotation axis
- 4.: stator
- 5.: housing
- 6.: rotor core
- 7.: first chamber
- 8.: second chamber
- 9.: first end
- 10.: second end
- 11.: cooling path
- 12.: radial gap
- 13.: axial fan
- 14.: return path
- 15.: first end wall
- 16.: generally cylindrical wall
- 17.: deflection surface
- 18.: radially inner section of deflection surface
- 19.: curved section of deflection surface
- 20.: radially outer section
- 21.: windings
- 22.: radially inner cylindrical wall part
- 23.: radially outer cylindrical wall part
- 24.: winding heads
- 25.: First channel
- 26.: Second channel
- 27.: third channel
- 28.: attachment means
- 29.: part of end wall
- 30.: second end wall
- 31.: axial facing surface of first end wall
- 32.: axial facing surface of first second wall
- 33.: seal
- 34.: inlet connector
- 35.: outlet connector

## Claims

1. An electric machine (1) comprising a rotor (2) arranged to rotate about an axis (3), and a stator (4) surrounding the rotor (2) in the radial direction, and a housing (5) accommodating the rotor (2) and the stator (4), whereby the rotor (2) comprises a rotor core (6) for magnetic interaction with the stator (4), and
- the rotor core (6) and the stator (4) extend axially between a first chamber (7) and a second chamber (8) arranged at a first axial end (9) and second axial end (10) respectively of the electric machine,
- at least one cooling path (11) extending in the axial direction between the second chamber (8) and the first chamber (7) is arranged in the rotor (2) or in a radial gap (12) between the rotor (2) and the stator (4),
- the rotor (2) further comprises an axial fan (13) for generating a flow of cooling fluid from the second chamber (8) to the first chamber (7) along the at least one cooling path (11),
- the housing (5) providing a return path (14) for cooling fluid from the first chamber (7) to the second chamber (8),
- whereby the housing (5) comprises a generally radially extending first end wall (15) and a generally cylindrical wall (16) extending between the first and second axial ends (9, 10) of the electric machine (1) and the accommodating the stator (4),
- whereby the axial fan (13) projects radially into the first chamber (7) and is arranged to direct flow of cooling fluid towards the generally radially extending first end wall (15),
- whereby the generally radially extending first end wall (15) comprises a deflection surface (17) for deflecting an axial flow of the cooling fluid into a radial flow.

2. An electric machine according to claim 1, whereby the deflection surface (17) comprises a radially inner section (18) which extends at least partly in the axial direction and transitions via a curved section (19) into a radially outer section (20) which extends substantially in the radial direction.

3. An electric machine according to claim 1, whereby the stator (4) comprises a plurality of windings (21) extending axially through the stator (4) and having winding heads (2) which project axially into the first and second chamber (7, 8) respectively, whereby the axial fan (13) is arranged at an axial position on the rotor in the region of the winding heads (24) and radially inwards of the winding heads (24).

4. An electric machine according to one of claims 1 to 3, whereby the cylindrical wall (16) of the housing comprises a radially inner cylindrical wall part (22) and a radially outer cylindrical wall part (23), whereby the radially inner cylindrical wall part (22) comprises at least one first channel (25) for liquid cooling of the stator (4).

5. An electric machine according to claim 4, whereby the at least one first channel (25) is closed on the radially outer side by the radially outer cylindrical wall part (23).

6. An electric machine according to claims 4 or 5, whereby the radially outer cylindrical wall part (23) comprises the return path (14) for cooling fluid from the first chamber (7) to the second chamber (8), whereby the return path (14) is in the form of at least one second channel (26) which is fluidly separated from the first channel (25).

7. An electric machine according to one of claims 4 to 6, further comprising at least one radially extending third channel (27) adjacent to the generally radially extending first end wall (15), the at least one radially extending third channel (27) extending through the radially inner cylindrical wall part (22) of the housing (5) and communicating fluidly with the return path (14).

8. An electric machine according to one of claims 4 to 7, whereby the radially inner cylindrical wall part (22) is integrally formed out of one piece with the generally radially extending first end wall (15).

9. An electric machine according to one of claims 4 to 8, whereby the first channel (25) forms a helical cooling path.

10. An electric machine according to one of claims 4 to 9, further comprising a generally radially extending second end wall (30) which delimits a portion of the second chamber (8) and is attached to the radially inner cylindrical wall part (22) such that the radially outer cylindrical wall part (23) of the housing (5) is fixed between axial facing surfaces (31, 32) of the first and second end walls (15, 30) respectively, fixing the radially outer cylindrical wall part (23) with respect to the inner cylindrical wall part (22).

11. An electric machine according to one of the preceding claims, whereby the generally radially extending first end wall (15) comprises attachment means (28) for attaching the electric machine to an external part, whereby the attachment means (28) are arranged in an area (29) of the end wall (15) which extends radially beyond the cylindrical wall (16) of the housing (5).
